# EUROPÄISCHE PATENTSCHRIFT

(11) **EP 3 687 847 B1**
(45) Veröffentlichungstag und Bekanntmachung des Hinweises auf die Patenterteilung: **06.10.2021**
(21) Anmeldenummer: 19795080.1
(22) Anmeldetag: 20.09.2019
(51) Int. Cl.: B60K 15/03, B60K 15/035

(54) **VERFAHREN ZUR STEUERUNG EINES BEFÜLLVORGANGES EINES KRAFTFAHRZEUGTANKS UND KRAFTFAHRZEUGTANK ZUR DURCHFÜHRUNG DES VERFAHRENS**
METHOD FOR CONTROLLING A FILLING PROCESS OF A MOTOR VEHICLE TANK AND MOTOR VEHICLE TANK FOR CARRYING THE METHOD
PROCÉDÉ DE COMMANDE D'UN PROCESSUS DE REMPLISSAGE D'UN RÉSERVOIR DE VÉHICULE À MOTEUR ET RÉSERVOIR DE VÉHICULE À MOTEUR DESTINÉ À METTRE EN OEUVRE LE PROCÉDÉ

(30) Priorität: 28.09.2018 DE 102018124103
(43) Veröffentlichungstag der Anmeldung: 05.08.2020
(73) Patentinhaber: Kautex Textron GmbH & Co. KG, 53229 Bonn (DE)
(72) Erfinder: BARKOW, Axel, 50354 Hürth (DE); EULITZ, Dirk, 53115 Bonn (DE); WIND, Stefan, 53773 Hennef (DE)
(74) Vertreter: Richly & Ritschel Patentanwälte PartG mbB
(86) Internationale Anmeldenummer: PCT/EP2019/075346
(87) Internationale Veröffentlichungsnummer: WO 2020/064550

(56) Entgegenhaltungen:
- DE-A1-102015 214 568
- DE-A1-102015 217 609
- DE-A1-102016 008 696
- DE-C1- 19 834 671
- US-A1- 2018 099 859

## Beschreibung

Die vorliegende Erfindung betrifft ein Verfahren zur Steuerung eines Befüllvorganges eines Kraftfahrzeugtanks. Ferner betrifft die vorliegende Erfindung einen Kraftfahrzeugtank zur Ausführung eines Verfahrens zur Steuerung eines Befüllvorganges.

Hybrid-Kraftfahrzeuge und dort insbesondere Plug-In-Hybrid-Kraftfahrzeuge (im Folgenden als PHEV abgekürzt; englische Abkürzung für plugin hybrid electric vehicle) weisen eine hohe rein elektrisch zurücklegbare Reichweite auf. In Städten werden zunehmend sogenannte Umweltzonen eingerichtet, in denen ein Betrieb eins Kfz mit Verbrennungsmotor verboten ist. Daher werden große Strecken mit rein elektrischem Antrieb zurückgelegt, ohne dass der Verbrennungsmotor aktiviert und Kraftstoff verbrannt wird. Eine Batterie des PHEV wird bei Bedarf wieder geladen, so dass weiterhin rein elektrisch gefahren werden kann.

Aus dem Stand der Technik bekannte Tanksysteme weisen keinerlei Vorrichtungen auf, die dem Fahrer oder Betanker eines Kraftfahrzeugs eine bedarfsgerechte Betankung erleichtern oder ihn dabei unterstützen. Daher ist es üblich, dass ein Fahrer sein Kraftfahrzeug (im Folgenden als Kfz abgekürzt) mit Kraftstoff entweder komplett füllt, oder je nach Höhe des mitgeführten Geldbetrags bis hin zu diesem Betrag den Kfz-Tank auffüllt, oder abschätzt, wie viel Kraftstoff für das Zurücklegen einer Fahrtstrecke notwendig ist, und die entsprechende Menge an Kraftstoff in den Kfz-Tank füllt. Gattungsgemäße DE 10 2015 214568 A1 beschreibt ein Steuergerät zur Steuerung einer Verriegelung von Türen und/oder Klappen eines Kraftfahrzeugs. Dabei ist das Steuergerät ausgebildet, ein Signal zur Verriegelung von Türen und/oder Klappen des Kraftfahrzeugs zu empfangen. Ferner ist das Steuergerät ausgebildet, basierend auf einem Aufenthaltsort des Kraftfahrzeugs ein Steuersignal für eine Verriegelungseinrichtung einer Tankklappe des Kraftfahrzeugs auszugeben, das ein Verriegeln der Tankklappe zu einem Zeitpunkt nach dem Verriegeln der Türen und/oder sonstigen Klappen des Kraftfahrzeugs bewirkt. Alternativ ist das Steuergerät ausgebildet, das Steuersignal basierend auf einem Füllstand eines Kraftstofftanks des Kraftfahrzeugs auszugeben.

Mittlerweile gibt es Bestrebungen, dass Kfz in vorbestimmten geographischen Bereichen lediglich eine begrenzte Menge an Kraftstoffen mitführen dürfen, sodass die Fahrer von Fahrzeugen und insbesondere von PHEV dazu motiviert werden, die Fahrzeuge vorzugsweise im elektrischen Antriebsbetrieb zu nutzen.

Entsprechende Regulierungen führen zu dem Problem, dass PHEV für unterschiedliche geographische Gebiete mit unterschiedlichen Tankgrößen auszustatten sind.

Der vorliegenden Erfindung liegt die Aufgabe zugrunde, ein Verfahren zur Steuerung eines Befüllvorganges eines Kraftfahrzeugtanks bereitzustellen, mit dem dieses Problem gelöst wird und das darüber hinaus einen komfortableren Befüllvorgang eines Kraftfahrzeugtanks ermöglicht.

Die der vorliegenden Erfindung zugrundeliegende Aufgabe wird durch ein Verfahren mit den Merkmalen des Anspruchs 1 gelöst. Vorteilhafte Ausgestaltungen des erfindungsgemäßen Verfahrens sind in den von Anspruch 1 abhängigen Ansprüchen beschrieben.

Im Genaueren wird die der vorliegenden Erfindung zugrundeliegende Aufgabe durch ein Verfahren zur Steuerung eines Befüllvorganges eines Kraftfahrzeugtanks gelöst, wobei der Kraftfahrzeugtank ein in den Kraftfahrzeugtank mündendes Einfüllrohr aufweist, über das der Kraftfahrzeugtank mittels einer Befülleinrichtung befüllbar ist. Der Kraftstofftank weist ferner ein Betriebs- und/oder Betankungsentlüftungsventil auf, das elektrisch und/oder elektromagnetisch zwischen einer Offenstellung, in der der Kraftfahrzeugtank mittels des Betriebs- und/oder Betankungsentlüftungsventils mit der Atmosphäre zumindest mittelbar fluidverbunden ist, und einer Schließstellung, in der der Kraftfahrzeugtank mittels des Betriebs- und/oder Betankungsentlüftungsventils von der Atmosphäre fluidgetrennt ist, betätigbar ist. Ferner weist der Kraftfahrzeugtank einen elektrisch und/oder elektromagnetisch betätigbaren Aktuator auf, mittels dem ein Beenden des Befüllvorganges des Kraftfahrzeugtanks initiierbar ist. Weiterhin weist der Kraftfahrzeugtank einen Füllstandsensor zum Bestimmen eines Füllstandes des Kraftfahrzeugtanks auf. Ferner weist der Kraftfahrzeugtank eine Tanksteuereinrichtung auf, die mit dem Betriebs- und/oder Betankungsentlüftungsventil und mit dem Aktuator mittels einer ersten Datenaustauschverbindung und mit dem Füllstandsensor mittels einer zweiten Datenaustauschverbindung signalgekoppelt ist. Das erfindungsgemäße Verfahren weist die folgenden Verfahrensschritte auf:
- Bestimmen einer geographischen Position des Kraftfahrzeugtanks;
- Ermitteln mittels der Tanksteuereinrichtung, ob die geographische Position des Kraftfahrzeugtanks innerhalb eines vorbestimmten geographischen Gebiets liegt; und
- Ermitteln eines von der geographischen Position des Kraftfahrzeugtanks abhängigen Abschaltfüllvolumens, wenn die geographische Position des Kraftfahrzeugtanks innerhalb des vorbestimmten geographischen Gebiets liegt.

Das erfindungsgemäße Verfahren weist den Vorteil auf, dass der Kraftfahrzeugtank eines Kfz beziehungsweise eines PHEV in Abhängigkeit von der geographischen Position des Kfz bzw. des PHEV und somit in Abhängigkeit der geographischen Lage des Kraftfahrzeugtanks lediglich bis zu einer vorbestimmten Maximalbefüllmenge befüllt werden kann, wobei die Maximalbefüllmenge einem vorbestimmten Abschaltfüllvolumen des Kraftfahrzeugtanks entspricht. Wenn beispielsweise in einer Stadt die sich auf dem geographischen Gebiet der Stadt bewegenden Fahrzeuge lediglich mit einer vorbestimmten Maximalbefüllmenge an Kraftstoff (beispielsweise 36 Liter) befüllt und bewegt werden dürfen, bietet das erfindungsgemäße Verfahren zur Steuerung eines Befüllvorganges des Kraftfahrzeugtanks den Vorteil, dass der Befüllvorgang des Kraftfahrzeugtanks in Abhängigkeit der geographischen Position des Kraftfahrzeugtanks bei einem vorbestimmten Abschaltfüllvolumen, das der Maximalbefüllmenge entspricht, automatisch gestoppt wird. Nach Erreichen des Abschaltfüllvolumens ist ein Nachtanken des Kraftfahrzeugtanks nicht möglich, wenn sich der Kraftfahrzeugtank in dem vorbestimmten geographischen Gebiet aufhält. Wenn der Kraftfahrzeugtank sich jedoch nicht auf einem geographischen Gebiet befindet, für das Begrenzungen hinsichtlich der mitzuführenden Kraftstoffmenge bestehen, kann der Kraftfahrzeugtank wie üblich bis hin zu einem Maximalfüllvolumen gefüllt werden.

Somit weist das vorliegende Verfahren den Vorteil auf, dass unabhängig von den Einsatzorten des Kfz bzw. des PHEV lediglich ein einziger Kraftfahrzeugtank angeboten werden muss.

Selbstverständlich ist es auch möglich, dass für unterschiedliche geographische Gebiete unterschiedliche Abschaltfüllvolumen definiert sind, die in einem elektronischen Speicher der Tanksteuereinrichtung gespeichert sein können. Ferner ist es selbstverständlich auch möglich, dass das Abschaltfüllvolumen bzw. die jeweiligen Abschaltfüllvolumina, die mit einem geographischen Gebiet bzw. mit geographischen Gebieten verknüpft sind, verändert werden können. Somit bietet das erfindungsgemäße Verfahren den Vorteil, dass auch bei beispielsweise einer Änderung einer Gesetzeslage der Kraftfahrzeugtank weiterhin verwendet werden kann.

Die Bestimmung der geographischen Position des Kraftfahrzeugtanks erfolgt vorzugsweise mittels einer Elektronikeinheit, beispielsweise mittels eines Navigationssystems.

Bei dem Verfahrensschritt des Bestimmens der geographischen Position des Kraftfahrzeugtanks werden vorzugsweise die geographische Position repräsentierenden Positionsdaten in einem elektronischen Datenspeicher einer Elektronikeinheit gespeichert. Diese die geographische Position des Kraftfahrzeugtanks repräsentierenden Positionsdaten werden vorzugsweise an die Tanksteuerungseinrichtung übertragen.

Bei den Positionsdaten handelt es sich vorzugsweise um geographische Positionsdaten, die die geographische Position des Kraftfahrzeugtanks und somit des Kraftfahrzeugs, in dem der Kraftfahrzeugtank verbaut ist, angeben.

Der Füllstandsensor ist dazu ausgebildet, die einen mittels des Füllstandsensors ermittelten Füllstand des Kraftfahrzeugtanks repräsentierenden Daten über die zweite Datenaustauschverbindung an die Tanksteuereinrichtung zu übertragen.

Vorzugsweise wird zwischen der Tanksteuereinrichtung und einem elektronischen Datenspeicher einer Elektronikeinheit, die beispielsweise als Navigationssystem ausgebildet sein kann, eine Datenaustauschverbindung etabliert.

Vorzugsweise weist das Verfahren ferner folgende Verfahrensschritte auf:
- Ermitteln eines Füllvolumens des Kraftfahrzeugtanks mittels eines Füllstandsensors;
- Vergleichen des Füllvolumens des Kraftfahrzeugtanks mit dem vorbestimmten Abschaltfüllvolumen mittels der Tanksteuereinrichtung; und
- Ausgeben eines von dem Vergleich des Füllvolumens des Kraftfahrzeugtanks mit dem vorbestimmten Abschaltfüllvolumen abhängigen Signals mittel der Tanksteuereinrichtung.

Das Füllvolumen des Kraftfahrzeugtanks ist die sich im Kraftfahrzeugtank befindliche Kraftstoffmenge.

Das von dem Vergleich des Füllvolumens des Kraftfahrzeugtanks mit dem vorbestimmten Abschaltfüllvolumen abhängige Signal ist vorzugsweise ein Öffnungssignal an ein Betriebs- und/oder Betankungsentlüftungsventil und/oder ein Schließsignal an einen Aktuator, mittels dem ein Beenden eines Befüllvorganges initiierbar ist. Weiter vorzugsweise ist das von dem Vergleich des Füllvolumens des Kraftfahrzeugtanks mit dem vorbestimmten Abschaltfüllvolumen abhängige Signal ein Signal, dass dem Fahrer des Kraftfahrzeugs darüber informiert wird, ob eine Betankung des Kraftfahrzeugtanks möglich ist.

Vorzugsweise weist das Verfahren ferner folgende Verfahrensschritte auf:
- Ermitteln, ob ein Befüllvorgang des Kraftfahrzeugtanks eingeleitet werden soll;
- Ausgeben eines Öffnungssignals von der Tanksteuereinrichtung an ein Betriebs- und/oder Betankungsentlüftungsventil, wenn das Füllvolumen des Kraftfahrzeugtanks geringer als das vorbestimmte Abschaltfüllvolumen ist;
- Überführen des Betriebs- und/oder Betankungsentlüftungsventils in dessen Offenstellung bei Empfang des Öffnungssignals; und
- Ausgeben eines Schließsignals von der Tanksteuereinrichtung an einen Aktuator, wenn das Füllvolumen des Kraftfahrzeugtanks das vorbestimmte Abschaltfüllvolumen erreicht oder überschritten hat.

Das Starten des Befüllvorganges wird vorzugsweise mittels der Tanksteuereinrichtung und/oder mittels einer einen elektronischen Datenspeicher aufweisenden Elektronikeinheit initiiert.

Das Beenden des Befüllvorganges wird vorzugsweise mittels der Tanksteuereinrichtung und/oder mittels der den elektronischen Datenspeicher umfassenden Elektronikeinheit initiiert.

Vorzugsweise weist das Verfahren ferner folgende Verfahrensschritte auf:
- Ausgeben des Öffnungssignals von der Tanksteuereinrichtung an das Betriebs- und/oder Betankungsentlüftungsventil, wenn die geographische Position des Kraftfahrzeugtanks außerhalb des vorbestimmten geographischen Gebiets liegt und das Füllvolumen des Kraftfahrzeugtanks geringer als ein vorbestimmtes Maximalfüllvolumen ist;
- Überführen des Betriebs- und/oder Betankungsentlüftungsventils in dessen Offenstellung bei Empfang des Öffnungssignals; und
- Ausgeben des Schließsignals von der Tanksteuereinrichtung an den elektrisch und/oder elektromagnetisch betätigbaren Aktuator, wenn das Füllvolumen des Kraftfahrzeugtanks (10) das vorbestimmte Maximalfüllvolumen erreicht oder überschritten hat.

Das Maximalfüllvolumen ist vorzugsweise per Software einstellbar. Weiter vorzugsweise wird das Maximalfüllvolumen auf einen vorbestimmten Prozentsatz eines Fassungsvermögens des Kraftfahrzeugtanks eingestellt. Beispielsweise wird das Maximalfüllvolumen auf 80% des Fassungsvermögens eingestellt. Selbstverständlich kann das Maximalfüllvolumen auch auf andere Prozentsätze des Fassungsvermögens eingestellt werden, beispielsweise auf 60% oder 70% oder 85% oder 90%. Diese Einstellung erfolgt insbesondere über eine entsprechende Speicherung des Maximalfüllvolumens repräsentierenden Daten in einem Speicher.

Vorzugsweise ist der zumindest eine Aktuator das im Kraftfahrzeugtank angeordnete Betriebs- und/oder Betankungsentlüftungsventil.

Das Betriebs- und/oder Betankungsentlüftungsventil wird auch als FLVV abgekürzt (aus dem englischen für fuel limit venting valve) .

Bei Empfang des Schließsignals wird mittels des FLVV eine Entlüftungsleitung, die üblicherweise über ein Aktivkohlefilter an der Atmosphäre mündet, geschlossen. Durch Übermittlung des Schließsignals an das FLVV werden zur Entlüftung des Kraftfahrzeugtanks sowieso benötigte Ventile zum Initiieren eines Beendens des Befüllvorganges verwendet. Dies hat zum Vorteil, dass nicht zusätzliche Bauteile in dem Kraftfahrzeugtank verwendet werden müssen, so dass die Komplexität des Kraftfahrzeugtanks reduziert wird.

Ferner wird durch Verwenden eines elektrisch und/oder elektromagnetisch betätigbaren Betriebs- und/oder Betankungsentlüftungsventil erreicht, dass die Betriebsentlüftungsfunktionalität und die Betankungsentlüftungsfunktionalität durch ein einziges Bauteil bereitgestellt werden kann. Bei herkömmlichen aus dem Stand der Technik bekannten Verfahren werden zur Realisierung der Betriebsentlüftungsfunktionalität und der Betankungsentlüftungsfunktionalität zwei separate Ventile benötigt.

Weiter vorzugsweise ist der zumindest eine Aktuator ein in und/oder an dem Einfüllrohr des Kraftfahrzeugtanks angeordnetes Rückschlagventil.

Das Rückschlagventil wird auch als ICV abgekürzt (aus dem englischen für inlet check valve).

Ein entsprechendes Verfahren, bei dem das Schließsignal an ein Rückschlagventil gesendet wird, das in dem Einfüllrohr oder an dem Einfüllrohr angeordnet ist, hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner bietet die Tatsache, dass zum Beenden des Befüllvorganges kein Druck im Kraftfahrzeugtank aufgebaut werden muss, den Vorteil, dass die in den Kraftfahrzeugtank eingefüllte Kraftstoffmenge präziser der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

Vorzugsweise ist der zumindest eine Aktuator ein zwischen dem Kraftfahrzeugtank und einem Aktivkohlefilter und/oder zwischen dem Aktivkohlefilter und der Atmosphäre angeordnetes Absperrventil.

Das Absperrventil wird auch als FTIV abgekürzt (aus dem englischen für fuel tank isolation valve). Wenn das Absperrventil zwischen dem Aktivkohlefilter und der Atmosphäre angeordnet ist, wird dieses auch als OBD-Ventil bezeichnet.

Durch Ansteuern des FTIV und Verwenden des FTIV zum Initiieren der Beendigung des Befüllvorganges werden in einem Kraftfahrzeug, insbesondere in einem PHEV notwendige Bauteile zum Beenden des Befüllvorganges verwendet. Da das FTIV turnusmäßig überprüft wird, beispielsweise während des Betriebs des Kraftfahrzeugs in Prüfzyklen und im Rahmen einer TÜV-Prüfung, wird durch Verwenden des FTIV zum Initiieren einer Beendigung des Befüllvorganges eine erhöhte Betriebssicherheit erreicht.

Vorzugsweise ist der zumindest eine Aktuator ein in ein Einfüllrohr des Kraftfahrzeugtanks einführbarer Störkörper.

Der Störkörper kann beispielsweise in das Einfüllrohr eingeschoben und/oder oder eingeschwenkt werden, so dass sich der freie Querschnitt des Einfüllrohrs verkleinert. Durch Ansteuern des Störkörpers zum Beenden des Befüllvorganges staut sich in das Einfüllrohr eingefüllter Kraftstoff in diesem auf, bis eine Abschaltbohrung des Zapfventils erreicht wird, wodurch der Betankungsvorgang beendet wird. Dies hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner wird durch die Tatsache, dass zum Beenden des Befüllvorganges kein Druck im Kraftfahrzeugtank aufgebaut werden muss, der Vorteil erzielt, dass die in den Kraftfahrzeugtank eingefüllte Kraftstoffmenge genauer der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

Vorzugsweise ist der zumindest eine Aktuator ein in einem Einfüllstutzen eingesetzter Elektromagnet.

Durch Aktivieren des Elektromagneten wird ein Schließen eines in das Einfüllrohr eingeführten Zapfventils bewirkt, wenn das Zapfventil eine entsprechende Funktionalität aufweist. Dies wiederum hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Da zum Beenden des Befüllvorganges kein Druck im Kraftfahrzeugtank aufgebaut werden muss, entspricht die in den Kraftfahrzeugtank eingefüllte Kraftstoffmenge präziser der in den Kraftfahrzeugtank einzufüllenden Kraftstoffmenge. Denn das in dem Kraftfahrzeugtank verbleibende Gasvolumen fungiert nicht als komprimierbare Gasfeder.

Weiter vorzugsweise ist das Verfahren derart ausgebildet, dass das Verfahren ferner einen Verfahrensschritt zum Etablieren einer Datenaustauschverbindung zwischen der Tanksteuereinrichtung und der Befülleinrichtung umfasst, wobei der zumindest eine Aktuator in der Befülleinrichtung angeordnet ist und das Schließsignal über die Datenaustauschverbindung an den Aktuator gesendet wird.

Die Befülleinrichtung kann eine Zapfanlage einer Tankstelle sein. Insbesondere kann die Befülleinrichtung als Zapfventil einer Zapfanlage ausgebildet sein. Dies hat zum Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Da zum Beenden des Befüllvorganges kein Druck im Kraftfahrzeugtank aufgebaut werden muss, entspricht die in den Kraftfahrzeugtank eingefüllte Kraftstoffmenge präziser der in den Kraftfahrzeugtank einzufüllenden Kraftstoffmenge, da das in dem Kraftfahrzeugtank verbleibende Gasvolumen nicht als komprimierbare Gasfeder fungiert. Die Menge des in das Einfüllrohr eingefüllten Kraftstoffs ist sehr genau bestimmbar, da die Geometrie und die Abmessungen des Einfüllrohrs bekannt sind, so dass die Genauigkeit der eingefüllten Kraftstoffmenge erhöht ist.

Die der vorliegenden Erfindung zugrundeliegende Aufgabe wird auch durch einen Kraftfahrzeugtank gelöst, der ein in den Kraftfahrzeugtank mündendes Einfüllrohr aufweist, über das der Kraftfahrzeugtank (10) mittels einer Befülleinrichtung (90) befüllbar ist. Der Kraftfahrzeugtank weist ferner ein Betriebs- und/oder Betankungsentlüftungsventil auf, das elektrisch und/oder elektromagnetisch zwischen einer Offenstellung, in der der Kraftfahrzeugtank mittels des Betriebs- und/oder Betankungsentlüftungsventils mit der Atmosphäre zumindest mittelbar fluidverbunden ist, und einer Schließstellung, in der der Kraftfahrzeugtank mittels des Betriebs- und/oder Betankungsentlüftungsventils von der Atmosphäre fluidgetrennt ist, betätigbar ist. Der Kraftfahrzeugtank weist ferner einen elektrisch und/oder elektromagnetisch betätigbaren Aktuator auf, mittels dem ein Beenden des Befüllvorganges des Kraftfahrzeugtanks initiierbar ist. Weiterhin weist der Kraftfahrzeugtank einen Füllstandsensor zum Bestimmen eines Füllstandes des Kraftfahrzeugtanks auf. Der erfindungsgemäße Kraftfahrzeugtank ist dadurch gekennzeichnet, dass dieser eine Tanksteuereinrichtung aufweist, die mit dem Betriebs- und/oder Betankungsentlüftungsventil und dem Aktuator mittels einer ersten Datenaustauschverbindung und mit dem Füllstandsensor mittels einer zweiten Datenaustauschverbindung signalgekoppelt ist, wobei die Tanksteuereinrichtung dazu ausgebildet ist, die oben beschriebenen Verfahrensschritte von zumindest einem der Ansprüche 1 bis 8 auszuführen.

Die Tanksteuereinrichtung kann hierzu eine Datentransceivereinheit umfassen, die dazu ausgebildet ist, über die Datenaustauschverbindung Daten zu empfangen. Die Datentransceivereinheit ist ferner dazu ausgebildet, Daten zu senden. Vorzugsweise können die Daten über die Datenaustauschverbindung von der Datentransceivereinheit gesendet werden. Jedoch ist die vorliegende Erfindung nicht darauf beschränkt, denn die Datentransceivereinheit kann auch Daten über eine von der Datenaustauschverbindung unterschiedliche Datenstrecken versenden.

Der erfindungsgemäße Kraftfahrzeugtank weist den Vorteil auf, dass dieser in Abhängigkeit von der geographischen Position des Kfz bzw. des PHEV, in dem der Kraftfahrzeugtank verbaut ist, lediglich bis zu einer vorbestimmten Maximalbefüllmenge befüllt werden kann, wobei die Maximalbefüllmenge dem vorbestimmten Abschaltfüllvolumen des Kraftfahrzeugtanks entspricht. Wenn beispielsweise in einer Stadt die sich auf dem geographischen Gebiet der Stadt bewegenden Fahrzeuge lediglich mit einer vorbestimmten Maximalbefüllmenge an Kraftstoff (beispielsweise 36 Liter) befüllt und bewegt werden dürfen, bietet der erfindungsgemäße Kraftfahrzeugtank den Vorteil, dass der Befüllvorgang des Kraftfahrzeugtanks in Abhängigkeit der geographischen Position des Kraftfahrzeugtanks bei einem vorbestimmten Abschaltfüllvolumen, das der Maximalbefüllmenge entspricht, automatisch gestoppt wird. Nach Erreichen des Abschaltfüllvolumens ist ein Nachtanken des Kraftfahrzeugtanks nicht möglich, wenn sich der Kraftfahrzeugtank in dem vorbestimmten geographischen Gebiet aufhält. Wenn der Kraftfahrzeugtank sich jedoch nicht auf einem geographischen Gebiet befindet, für das Begrenzungen hinsichtlich der mitzuführenden Kraftstoffmenge bestehen, kann der Kraftfahrzeugtank wie üblich bis hin zu einem Maximalfüllvolumen gefüllt werden.

Somit weist der erfindungsgemäße Kraftfahrzeugtank den Vorteil auf, dass dieser unabhängig von den Einsatzorten des Kfz bzw. des PHEV verbaut und verwendet werden kann.

Selbstverständlich ist es auch möglich, dass für unterschiedliche geographische Gebiete unterschiedliche Abschaltfüllvolumen definiert sind, die in einem elektronischen Speicher der Tanksteuereinrichtung gespeichert sein können. Ferner ist es selbstverständlich auch möglich, dass das Abschaltfüllvolumen bzw. die jeweiligen Abschaltfüllvolumina, die mit einem geographischen Gebiet bzw. mit geographischen Gebieten verknüpft sind, verändert werden können. Somit bietet der erfindungsgemäße Kraftfahrzeugtank den Vorteil, dass auch bei beispielsweise einer Änderung einer Gesetzeslage der Kraftfahrzeugtank weiterhin verwendet werden kann.

Die Tanksteuerungseinrichtung kann als separate elektronische Einrichtung ausgebildet sein. Jedoch kann die Tanksteuerungseinrichtung auch als Teil eines Bordcomputersystems des Kraftfahrzeugs ausgebildet sein und eine Untereinheit des Bordcomputersystems darstellen.

Unter einer elektrischen und/oder elektromagnetischen Verstellbarkeit eines Aktuators ist eine elektromechanische Verstellung des Aktuators zu verstehen.

Vorzugsweise ist der Kraftfahrzeugtank derart ausgebildet, dass dieser eine Datenempfangseinheit aufweist, über die in einem elektronischen Datenspeicher gespeicherte Daten an die Tanksteuereinrichtung übertragbar sind.

Der entsprechend ausgebildete Kraftfahrzeugtank bietet den Vorteil, dass Aktionen wie beispielsweise ein Befüllstart und/oder ein Befüllstopp des Kraftfahrzeugtanks durch eine den elektronischen Datenspeicher umfassende Elektronikeinheit und/oder durch eine Steuerungseinrichtung (beispielsweise ein Bordcomputer des Kfz und/oder ein mobiles Endgerät und/oder die Tanksteuereinrichtung selber) initiierbar sind.

Weiter vorzugsweise ist der Kraftfahrzeugtank derart ausgebildet, dass die Tanksteuereinrichtung ferner eine Datenausgabeeinheit umfasst, über die ein Öffnungssignal und/oder ein Schließsignal ausgebbar ist/sind.

Weiter vorzugsweise ist der Kraftfahrzeugtank derart ausgebildet, dass der zumindest eine Aktuator als ein Betriebs- und/oder Betankungsentlüftungsventil ausgebildet ist, das im Kraftfahrzeugtank angeordnet ist, wobei das Betriebs- und/oder Betankungsentlüftungsventil elektrisch und/oder elektromagnetisch zwischen einer Offenstellung und einer Schließstellung betätigbar ist, wobei in der Offenstellung des Betriebs- und/oder Betankungsentlüftungsventils der Kraftfahrzeugtank mittels des Betriebs- und/oder Betankungsentlüftungsventils mit einer Entlüftungsleitung fluidverbunden ist, und wobei in der Schließstellung des Betriebs- und/oder Betankungsentlüftungsventils der Kraftfahrzeugtank von der Entlüftungsleitung mittels des Betriebs- und/oder Betankungsentlüftungsventils fluidgetrennt ist.

Die Verwendung des Betriebs- und/oder Betankungsentlüftungsventils zum Beenden eines Befüllvorganges bietet den Vorteil, dass sowieso für den Betrieb des Kraftfahrzeugtanks notwendige Ventileinrichtungen verwendet werden, um den Betankungsvorgang elektrisch und/oder elektromagnetisch zu beenden, so dass nicht weitere Bauteile im Kraftstofftank einzubauen sind, wodurch die Komplexität des entsprechend ausgebildeten Kraftfahrzeugtanks nicht erhöht wird.

Vorzugsweise ist der Kraftfahrzeugtank derart ausgebildet, dass der zumindest eine Aktuator als ein Rückschlagventil ausgebildet ist, das in einem in den Kraftfahrzeugtank mündenden Einfüllrohr angeordnet ist, wobei das Rückschlagventil elektrisch und/oder elektromagnetisch zwischen einer Offenstellung und einer Schließstellung betätigbar ist, wobei in der Offenstellung des Rückschlagventils der Kraftfahrzeugtank mit dem Einfüllrohr fluidverbunden ist, und wobei in der Schließstellung des Rückschlagventils der Kraftfahrzeugtank von dem Einfüllrohr mittels des Rückschlagventils fluidgetrennt oder die lichte Weite des Einfüllrohrs mittels des Rückschlagventils reduziert ist.

Weiter vorzugsweise ist der Kraftfahrzeugtank derart ausgebildet, dass der zumindest eine Aktuator als ein Störkörper ausgebildet ist, der in dem in den Kraftfahrzeugtank mündenden Einfüllrohr angeordnet ist, wobei der Störkörper elektrisch und/oder elektromagnetisch zwischen einer Offenstellung und einer Störstellung betätigbar ist, wobei in der Offenstellung des Störkörpers eine lichte Weite des Einfüllrohres nicht reduziert ist, und wobei in der Störstellung des Störkörpers dieser in das Einfüllrohr ragt und die lichte Weite des Einfüllrohrs reduziert.

Weiter vorzugsweise ist der Kraftfahrzeugtank derart ausgebildet, dass der zumindest eine Aktuator als Absperrventil ausgebildet ist, das zwischen dem Kraftfahrzeugtank und einem Aktivkohlefilter angeordnet ist, wobei das Absperrventil elektrisch und/oder elektromagnetisch zwischen einer Offenstellung und einer Schließstellung betätigbar ist, wobei in der Offenstellung des Absperrventils der Kraftfahrzeugtank mittels des Absperrventils mit dem Aktivkohlefilter fluidverbunden ist, und wobei in der Schließstellung des Absperrventils der Kraftfahrzeugtank von dem Aktivkohlefilter mittels des Absperrventils fluidgetrennt ist.

Weiter vorzugsweise ist der Kraftfahrzeugtank derart ausgebildet, dass der zumindest eine Aktuator als ein Elektromagnet ausgebildet ist, der in einem Einfüllstutzen des in den Kraftfahrzeugtank mündenden Einfüllrohrs angeordnet ist, wobei der Elektromagnet zwischen einem Aktivzustand und einem Passivzustand betätigbar ist, wobei im Aktivzustand der Elektromagnet ein Magnetfeld erzeugt, und wobei im Passivzustand der Elektromagnet kein Magnetfeld erzeugt.

Die vier zuletzt beschriebenen Ausführungen des Kraftfahrzeugtanks bieten den Vorteil, dass zum Beenden des Befüllvorganges kein Innendruck im Kraftfahrzeugtank aufgebaut werden muss, so dass nach Beenden des Befüllvorganges der Kraftfahrzeugtank im Wesentlichen drucklos ist. Da kein Innendruck aufgebaut wird, dehnt sich der Kraftfahrzeugtank auch nicht aus, so dass die Genauigkeit der Füllmengenbestimmung im Kraftfahrzeugtank erhöht ist. Ferner bietet die Tatsache, dass zum Beenden des Befüllvorganges kein Druck im Kraftfahrzeugtank aufgebaut werden muss, den Vorteil, dass die in den Kraftfahrzeugtank eingefüllte Kraftstoffmenge präziser der in den Kraftfahrzeugtank einzufüllenden Kraftstoffmenge entspricht. Denn das in dem Kraftfahrzeugtank verbleibende Gasvolumen fungiert nicht als komprimierbare Gasfeder. Die Menge des in das Einfüllrohr eingefüllten Kraftstoffs ist sehr genau bestimmbar, so dass die Genauigkeit der eingefüllten Kraftstoffmenge erhöht ist.

Weiter vorzugsweise ist der Kraftfahrzeugtank derart ausgebildet, dass das von dem Vergleich des Füllvolumens des Kraftfahrzeugtanks mit dem vorbestimmten Abschaltfüllvolumen abhängige Signal über eine Signalübertragungseinrichtung ausgegeben wird.

Beispielsweise kann das Signal in einer Armaturentafel des Kraftfahrzeugs und/oder auf einer Anzeigeeinrichtung eines mobilen Endgeräts (beispielsweise ein Smartphone) angezeigt werden. Ferner das Signal akustisch übertragen werden. Weiterhin ist es möglich, dass das Signal über eine Vibrationen erzeugende Einrichtung an den Fahrer übertragen wird.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung eines erfindungsgemäßen Kraftfahrzeugtanks der zur Ausführung des erfindungsgemäßen Verfahrens zum Befüllen des Kraftfahrzeugtanks ausgelegt ist;
- Figur 2:: eine schematische Schnittdarstellung eines Einfüllrohrs samt Einfüllstutzen eines erfindungsgemäßen Kraftfahrzeugtanks;
- Figur 3:: ein Verfahrensablaufdiagramm eines erfindungsgemäßen Verfahrens zum Steuerung eines Befüllvorganges des in Figur 1 dargestellten Kraftfahrzeugtanks.

In der nun folgenden Beschreibung bezeichnen gleiche Bezugszeichen gleiche Bauteile beziehungsweise gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

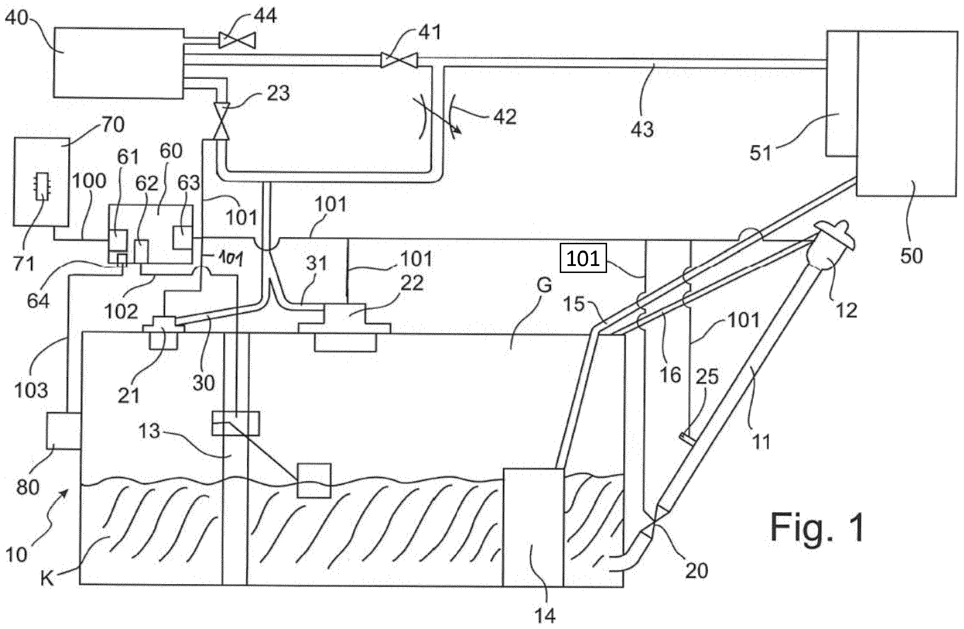

Figur 1 zeigt eine schematische Darstellung eines Kraftfahrzeugtanks 10 der zur Ausführung des erfindungsgemäßen Verfahrens zum Befüllen des Kraftfahrzeugstanks 10 ausgelegt ist. Der Kraftfahrzeugtank 10 beherbergt eine gewisse Menge von Kraftstoff K und darüber hinaus ein Gasvolumen G, das üblicherweise mit Kohlenwasserstoffen gesättigt ist. Zum Einfüllen von Kraftstoff K weist der Kraftfahrzeugtank 10 ein Einfüllrohr 11 auf, an dessen vom Kraftstofftank 10 abgewandten Ende ein Einfüllstutzen 12 angeordnet ist. Weiterhin beherbergt der Kraftfahrzeugtank 10 eine Kraftstofffördereinrichtung 14, die auch als Kraftstoffpumpe 14 bezeichnet wird. Die Kraftstoffpumpe 14 ist über eine Kraftstoffleitung 15 mit einem Motor 50 eines in der Figur nicht dargestellten Kraftfahrzeugs zum Fördern des Kraftstoffs K hin zum Motor 50 fluidverbunden. Ferner kann der Kraftfahrzeugtank 10 eine Rezirkulationsleitung 16 umfassen, die mit dem Kraftfahrzeugtank 10 und einem vom Einfüllstutzen 12 umschlossenen Volumen fluidverbunden ist. Die Rezirkulationsleitung 16 dient einem Gasaustausch zwischen dem Kraftfahrzeugtank 10 und dem Einfüllstutzen 12 während eines Betankungsvorgangs des Kraftfahrzeugtanks 10 und ist lediglich optional und üblicherweise für den US-amerikanischen Markt vorgesehen.

Der erfindungsgemäße Kraftfahrzeugtank 10 umfasst eine Tanksteuereinrichtung 60, die eine Datenempfangseinheit 61 umfasst, über die elektronische Daten an die Tanksteuereinrichtung 60 übertragbar sind. Aus Figur 1 ist ersichtlich, dass die Datenempfangseinheit 61 über eine Datenleitung 100 mit einer Elektronikeinheit 70 verbunden ist, so dass eine Datenaustauschverbindung zwischen dem Tanksteuerungseinrichtung 60 und der Elektronikeinheit 70 ermöglicht ist. Die Elektronikeinheit 70 wiederum umfasst einen elektronischen Datenspeicher 71, so dass die in dem elektronischen Datenspeicher 71 gespeicherten Daten über die Datenleitung 100 an die Elektronikeinheit 60 übertragbar sind. Die Datenleitung 100 kann dabei dergestalt sein, dass Daten bidirektional zwischen der Elektronikeinheit 70 und der Tanksteuerungseinrichtung 60 übertragbar sind. Jedoch kann die Datenleitung 100 auch dergestalt sein, dass lediglich Daten von der Elektronikeinheit 70 hin zur Tanksteuereinrichtung 60 übertragbar sind. Die Elektronikeinheit 70 kann beispielsweise ein Navigationssystem 70 sein, das Teil des Kraftfahrzeugs und/oder Teil eines mobilen Endgeräts 70 ist, wobei das mobile Endgerät beispielsweise ein Smartphone 70 sein kann. Ferner kann die Elektronikeinheit 70 beispielsweise ein Bordcomputer 70 des den Kraftfahrzeugtank 10 aufweisenden Kfz sein. Darüber hinaus ist es auch möglich, dass es sich bei der Elektronikeinheit 70 um eine Datenverarbeitungsanlage 70 handelt, die zur Erzeugung und Bereitstellung einer Datenwolke ausgebildet ist.

Die Datenleitung 100 ermöglicht eine Übertragung von elektrischen Signalen zwischen der Elektronikeinheit 70 und der Tanksteuerungseinrichtung 60. Darüber hinaus ist es auch möglich, dass die Datenleitung 100 derart ausgestaltet ist, dass Daten zwischen der Elektronikeinheit 70 und der Tanksteuerungseinrichtung 60 drahtlos übertragen werden. Beispielsweise können über die Datenleitung 100 die geographische Position des Kraftfahrzeugs und somit des Kraftfahrzeugtanks 10 repräsentierende Daten an die Tanksteuerungseinrichtung 60 übertragen werden.

Ferner ist aus Figur 1 ersichtlich, dass die Tanksteuerungseinrichtung 60 eine Datenausgabeeinheit 63 umfasst, über die Daten und/oder Signale über eine erste Datenaustauschverbindung 101 an elektrisch und/oder elektromagnetisch betätigbaren Aktuatoren 20, 21, 22, 23, 24, 25 übertragbar sind. Die erste Datenaustauschverbindung 101 kann auch als erste Datenleitung 101 oder als erste Signalleitung 101 oder allgemein als erste elektrische Leitung 101 bezeichnet werden. Die weiter unten noch zu spezifizierenden Aktuatoren 20-25 sind dazu ausgebildet, ein Beenden eines Befüllvorganges des Kraftfahrzeugtanks 10 zu initiieren. Hierzu ist die Tanksteuerungseinrichtung 60 dazu ausgebildet, an einen oder an mehrere der Aktuatoren 20-25 ein Schließsignal, das auch als Befüllstoppsignal bezeichnet werden kann, über die Datenaustauschverbindung 101 zu übertragen, so dass bei Empfang des Befüllstoppsignals zumindest einer der Aktuatoren 20-25 auf eine weiter unten zu spezifizieren der Art und Weise ein Beenden des Befüllvorganges initiiert.

Aus Figur 1 ist ersichtlich, dass der Kraftfahrzeugtank 10 ferner einen Füllstandsensor 13 umfasst, der mit der Tanksteuereinrichtung 60 über eine zweite Datenaustauschverbindung 102 in Form einer Datenleitung 102 verbunden ist. Zur Übertragung der Daten von dem Füllstandsensor 13 an die Tanksteuereinrichtung 60 umfasst diese eine zweite Datenempfangseinheit 62. Der Füllstandsensor 13 ist dabei dazu ausgebildet, Daten, die einen mittels des Füllstandsensors 13 ermittelten Füllstand des Kraftfahrzeugtanks 10 repräsentieren, über die zweite Datenaustauschverbindung 102 an die Tanksteuereinrichtung 60 zu übertragen.

Somit kann die in den Kraftfahrzeugtank 10 eingefüllte Menge von Kraftstoff K in Echtzeit überprüft werden und durch die Tanksteuereinrichtung 60 bewertet werden, wobei nach Erreichen der einzufüllenden Kraftstoffmenge das Befüllstoppsignal an zumindest einen der Aktuatoren 20-25 ausgegeben wird, woraufhin der Befüllvorgang beendet wird.

In Figur 1 ist der Kraftfahrzeugtank 10 mit Aktuatoren 20-25 dargestellt. Jedoch ist die vorliegende Erfindung nicht derart zu verstehen, dass sämtliche Aktoren Aktuatoren 20-25 notwendig sind, um ein Beenden eines Befüllvorganges des Kraftfahrzeugtanks 10 zu initiieren. Vielmehr kann ein Beenden eines Befüllvorganges des Kraftfahrzeugtanks 10 durch lediglich einen einzigen elektrisch und/oder elektromagnetisch betätigbaren Aktuator 20-25 initiiert werden. Folglich ist die vorliegende Erfindung derart zu verstehen, dass der erfindungsgemäße Kraftfahrzeugtank 10 lediglich auch einen einzigen elektrisch und/oder elektromagnetisch betätigbaren Aktuator 20-25 aufweisen kann. Daher ist Figur 1 so zu verstehen, dass der Kraftfahrzeugtank 10 zumindest einen der elektrisch und/oder elektromagnetisch betätigbaren Aktuatoren 20-25 aufweist. Jedoch kann der Kraftfahrzeugtank 10 auch mehrere der elektrisch und/oder elektromagnetisch betätigbaren Aktuatoren 20-25 aufweisen. Ein Befüllvorgang kann auch mittels des Auslassventils 41 und/oder mittels des Diagnoseventils 44 erfolgen.

Der erfindungsgemäße Kraftfahrzeugtank 10 ist dazu ausgebildet, eine Datenaustauschverbindung zwischen der Tanksteuerungseinrichtung 60 und dem elektronischen Datenspeicher 71 der Elektronikeinheit 70 zu etablieren. Der erfindungsgemäße Kraftfahrzeugtank 10 ist ferner dazu ausgebildet, eine in den Kraftfahrzeugtank 10 einzufüllende Kraftstoffmenge mittels über die Datenleitung 100 aus dem elektronischen Datenspeicher 71 übertragenen Daten zu ermitteln.

Die Verfahrensschritte des Etablierens der Datenaustauschverbindung und des Ermittelns der in den Kraftfahrzeugtank 10 einzufüllenden Kraftstoffmenge kann von der fahrzeugseitigen Tanksteuereinrichtung 60 und/oder auch von der Elektronikeinheit 70 durchgeführt werden. Die Ermittlung der einzufüllenden Kraftstoffmenge kann auf mannigfaltige Art und Weise erfolgen. So kann beispielsweise die einzufüllende Kraftstoffmenge aus der Elektronikeinheit 70 übertragen werden. Hierzu weist dann die Elektronikeinheit 70 sämtliche notwendigen Informationen auf, um die einzufüllende Kraftstoffmenge zu bestimmen/berechnen.

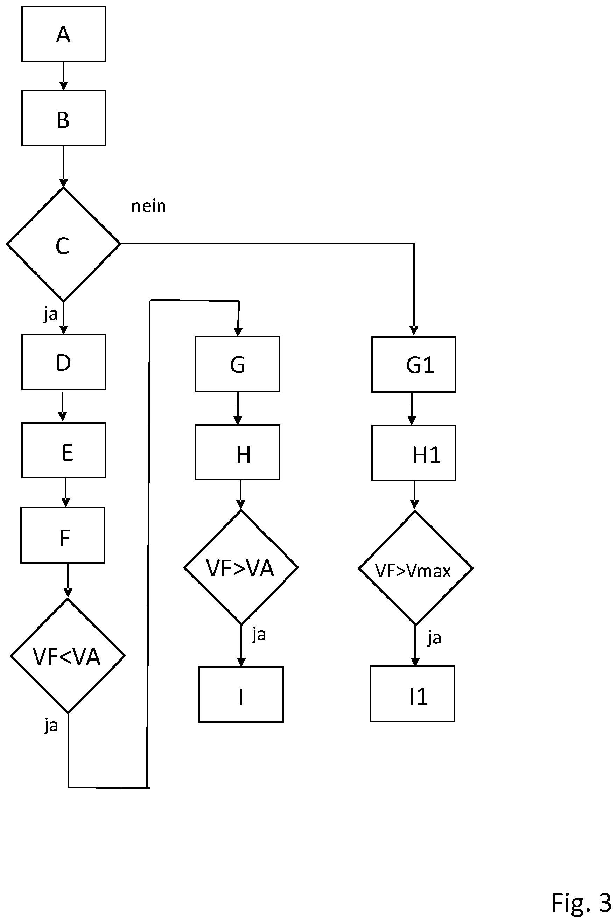

Nachfolgend wird mit Bezug auf Figur 3 ein Verfahren zur Steuerung eines Befüllvorganges des Kraftfahrzeugtanks 10 beschrieben. In einem Verfahrensschritt A wird ermittelt, ob ein Befüllvorgang des Kraftfahrzeugtanks 10 eingeleitet werden soll. Hierzu kann beispielsweise eine Stellung einer in den Figuren nicht dargestellten Tankklappe ermittelt werden, die den Einfüllstutzen 12 in einer Schließstellung der Tankklappe verdeckt und in einer Offenstellung der Tankklappe freigibt.

In einem Verfahrensschritt B wird eine geographische Position des Kraftfahrzeugtanks 10 bestimmt. Hierzu werden beispielsweise entsprechende Positionsdaten von der Elektronikeinheit 70 bzw. dessen elektronischem Speicher 71 über die Datenleitung 100 an die Tanksteuereinrichtung 60 übertragen.

In einem Verfahrensschritt C wird mittels der Tanksteuereinrichtung 60 ermittelt, ob die geographische Position des Kraftfahrzeugtanks 10 innerhalb eines vorbestimmten geographischen Gebiets liegt.

Wenn die geographische Position des Kraftfahrzeugtanks 10 in dem vorbestimmten geographischen Gebiet liegt, wird in einem Verfahrensschritt D ein von der geographischen Position des Kraftfahrzeugtanks 10 abhängiges Abschaltfüllvolumen ermittelt.

Anschließend wird in einem Verfahrensschritt E ein Füllvolumen des Kraftfahrzeugtanks 10 mittels des Füllstandsensors 13 ermittelt und über die zweite Datenaustauschverbindung 102 an die Tanksteuereinrichtung 60 übertragen.

Die Tanksteuereinrichtung 60 vergleicht in einem Verfahrensschritt F das Füllvolumen V_{F} des Kraftfahrzeugtanks 10 mit dem vorbestimmten Abschaltfüllvolumen V_{A}.

Wenn das Füllvolumen V_{F} geringer als das vorbestimmte Abschaltfüllvolumen V_{A} ist, wird in einem Verfahrensschritt G ein Öffnungssignal von der Tanksteuereinrichtung 60 an das Betriebs- und/oder Betankungsentlüftungsventil 21, 22 ausgegeben, woraufhin in einem Verfahrensschritt H das Betriebs- und/oder Betankungsentlüftungsventil 21, 22 in dessen Offenstellung bei Empfang des Öffnungssignals überführt wird.

Bei fortwährender Ermittlung des Füllvolumens des Kraftfahrzeugtanks 10 mittels des Füllstandsensors 13 wird in einem Verfahrensschritt I ein Schließsignal von der Tanksteuereinrichtung 60 an zumindest einen der Aktuatoren 20, 21, 22, 23, 24, 25, 44 ausgegeben, wenn das Füllvolumen des Kraftfahrzeugtanks 10 das vorbestimmte Abschaltfüllvolumen erreicht oder überschritten hat.

Wenn in dem Verfahrensschritt C ermittelt wird, dass die geographische Position des Kraftfahrzeugtanks 10 außerhalb des vorbestimmten geographischen Gebiets liegt und das Füllvolumen V_{F} des Kraftfahrzeugtanks 10 geringer als ein vorbestimmtes Maximalfüllvolumen Vₘₐₓ des Kraftstofftanks 10 ist, wird in einem Verfahrensschritt G1 ein Öffnungssignal von der Tanksteuereinrichtung 60 an das Betriebs- und/oder Betankungsentlüftungsventil 21, 22 ausgegeben, woraufhin in einem Verfahrensschritt H1 das Betriebs- und/oder Betankungsentlüftungsventils 21, 22 in dessen Offenstellung bei Empfang des Öffnungssignals überführt wird.

Bei fortwährender Ermittlung des Füllvolumens des Kraftfahrzeugtanks 10 mittels des Füllstandsensors 13 wird in einem Verfahrensschritt I1 ein Schließsignal von der Tanksteuereinrichtung 60 an zumindest einen elektrisch und/oder elektromagnetisch betätigbaren Aktuator 20, 21, 22, 23, 24, 25, 44 ausgegeben, wenn das Füllvolumen V_{F} des Kraftfahrzeugtanks 10 das vorbestimmte Maximalfüllvolumen Vₘₐₓ erreicht oder überschritten hat.

Gemäß einer ersten Ausführungsform der vorliegenden Erfindung ist der elektrisch und/oder elektromagnetisch betätigbare Aktuator 22 als Betankungsentlüftungsventil 22 ausgebildet, das im / am Kraftfahrzeugtank 10 angeordnet ist. In dem dargestellten Ausführungsbeispiel ist das Betriebsentlüftungsventil 21 während der Betankung verschlossen. Bei Empfang eines Schließsignals, das auch als Befüllstoppsignal bezeichnet werden kann und das von der Tanksteuereinrichtung 60 über die Datenausgabeeinheit 63 an das Betankungsentlüftungsventil 22 ausgegeben wird, schließt dieses Ventil, so dass ein Entlüften des Kraftfahrzeugtanks 10 während des Betankungsvorganges unterbunden wird. Durch weiteres Einleiten von Kraftstoff über das Einfüllrohr 11 in den Kraftfahrzeugtank 10 steigt der Tankinnendruck, so dass in das Einfüllrohr 11 eingeleiteter Kraftstoff in dem Einfüllrohr 11 ansteigt, bis der Kraftstoff eine Abschaltbohrung 91 eines eingesetzten Zapfventils 90 erreicht, wodurch der Befüllvorgang beendet wird.

Das Betankungsentlüftungsventil 22 ist elektrisch und/oder elektromagnetisch zwischen einer Offenstellung und einer Schließstellung betätigbar/verstellbar, wobei in dessen Offenstellung der Kraftfahrzeugtank 10 über das Betankungsentlüftungsventil 22 mit der Atmosphäre fluidverbunden ist, und wobei in der Schließstellung Betankungsentlüftungsventils 22 der Kraftfahrzeugtank 10 von der Atmosphäre fluidgetrennt ist.

In Figur 1 ist dargestellt, dass die Fluidverbindung des Kraftfahrzeugtanks 10 zur Atmosphäre über einen Aktivkohlefilter 40 und ein Auslassventil 41 bzw. ein Diagnoseventil 44 erfolgt, jedoch ist das Aktivkohlefilter 40 für die vorliegende Erfindung nicht obligatorisch sondern optional.

In einer zweiten Ausführungsform der vorliegenden Erfindung weist der Kraftfahrzeugtank 10 ein Aktivkohlefilter 40 auf, das über ein Absperrventil 23 mit dem Betriebsentlüftungsventil 21 und dem Betankungsentlüftungsventil 22 und somit dem Kraftfahrzeugtank 10 fluidverbunden ist. Bei dem dargestellten Ausführungsbeispiel müssen das Betriebsentlüftungsventil 21 und das Betankungsentlüftungsventil 22 nicht notwendigerweise elektrisch und/oder elektromagnetisch betätigbar sein, sondern lediglich das Absperrventil 23 muss elektrisch und/oder elektromagnetisch betätigbar sein. Jedoch ist es selbstverständlich auch möglich, dass auch bei dem zweiten Ausführungsbeispiel der vorliegenden Erfindung das Betriebsentlüftungsventil 21 und auch das Betankungsentlüftungsventil 22 neben dem Absperrventil 23 elektrisch und/oder elektromagnetisch betätigbar sind.

Das Absperrventil 23 ist zwischen dem Kraftfahrzeugtank 10 und dem Aktivkohlefilter 40 angeordnet und elektrisch und/oder elektromagnetisch zwischen einer Offenstellung und einer Schließstellung betätigbar/verstellbar, wobei in der Offenstellung des Absperrventils 23 der Kraftfahrzeugtank 10 mittels des Absperrventils 23 mit dem Aktivkohlefilter 40 fluidverbunden ist, und wobei in der Schließstellung des Absperrventils 23 der Kraftfahrzeugtank 10 von dem Aktivkohlefilter 40 mittels des Absperrventils 23 fluidgetrennt ist. Bei Empfang eines Schließsignals, das auch als Befüllstoppsignal bezeichnet werden kann und das von der Datenausgabeeinheit 63 der Tanksteuereinrichtung 60 an das Absperrventil 23 über die erste Datenaustauschverbindung 101 übertragen wird, schließt das Absperrventil 23, so dass eine Entlüftung des Kraftstoffbehälters 10 während des Betankungsvorganges unterbunden wird, so dass durch Einfüllen von Kraftstoff über das Einfüllrohr 11 in den Kraftfahrzeugtank 10 dessen Innendruck ansteigt. Durch weiteres Einleiten von Kraftstoff in das Einfüllrohr 11 steigt der Kraftstoff in dem Einfüllrohr 11 an, bis eine Abschaltbohrung 91 eines Zapfventils 90 erreicht wird, woraufhin der Befüllvorgang beendet wird.

In einer dritten Ausführungsform der vorliegenden Erfindung ist der Aktuator 20 als ein Rückschlagventil 20 ausgebildet, das in dem Einfüllrohr 11 angeordnet ist. Das Rückschlagventil 20 ist elektrisch und/oder elektromagnetisch zwischen einer Offenstellung und einer Schließstellung betätigbar, wobei in der Offenstellung des Rückschlagventils 20 der Kraftfahrzeugtank 10 mit dem Einfüllrohr 11 fluidverbunden ist, und wobei in der Schließstellung des Rückschlagventils 20 der Kraftfahrzeugtank 10 von dem Einfüllrohr 11 mittels des Rückschlagventils 20 fluidgetrennt ist oder zumindest die lichte Weite des Einfüllrohrs 11 mittels des Rückschlagventils 20 reduziert ist.

Bei Empfang eines Schließsignals, das auch als Befüllstoppsignal bezeichnet werden kann und das von der Datenausgabeeinheit 63 der Tanksteuerungseinrichtung 60 über die erste Datenaustauschverbindung 101 an das Rückschlagventil 20 ausgegeben wird, wird das Rückschlagventil 20 in dessen Schließstellung überführt, woraufhin in das Einfüllrohr 11 eingeleiteter Kraftstoff nicht mehr oder lediglich verlangsamt in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis eine Abschaltbohrung 91 eines Zapfventils 90 erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

Gemäß einer vierten Ausführungsform der vorliegenden Erfindung ist der zumindest eine elektrisch und/oder elektromagnetisch betätigbare Aktuator 25 als ein Störkörper 25 ausgebildet, der im Einfüllrohr 11 angeordnet ist. Der Störkörper 25 ist dabei zwischen einer Offenstellung und einer Störstellung elektrisch und/oder elektromagnetisch betätigbar/verstellbar, wobei in der Offenstellung des Störkörpers 25 die lichte Weite des Einfüllrohrs 11 nicht reduziert ist, und wobei in der Störstellung des Störkörpers 25 dieser in das Einfüllrohr 11 hineinragt und somit die lichte Weite des Einfüllrohrs 11 reduziert.

Bei Empfang eines Schließsignals, das auch als Befüllstoppsignal bezeichnet werden kann und das von der Datenausgabeeinheit 63 der Tanksteuerungseinrichtung 60 über die erste Datenaustauschverbindung 101 an den Störkörper 25 ausgegeben wird, wird der Störkörper 25 in dessen Schließstellung überführt, woraufhin in das Einfüllrohr 11 eingeleiteter Kraftstoff nicht mehr oder mit einer verminderten Geschwindigkeit in den Kraftfahrzeugtank 10 eingeleitet werden kann. Durch weiteres Einleiten von Kraftstoff in das Einfüllrohr 11 steigt der Kraftstoff in dem Einfüllrohr 11 an, bis eine Abschaltbohrung 91 eines Zapfventils 90 erreicht wird, woraufhin der Befüllvorgang beendet wird.

Ein entsprechend ausgebildeter Kraftfahrzeugtank 10 bietet den Vorteil, dass zum Beenden des Befüllvorganges kein Druck innerhalb des Kraftfahrzeugtanks 10 aufgebaut werden muss, so dass nach Beenden des Befüllvorganges der Kraftstofftank 10 im Wesentlichen drucklos ist. Dadurch wird eine Beladung eines eventuell vorgesehenen Aktivkohlefilters 40 reduziert. Darüber hinaus ist auch die Bestimmung einer Kraftstoffmenge im Kraftfahrzeugtank 10 mit einer erhöhten Genauigkeit möglich, da aufgrund der unterbleibenden Druckbeaufschlagung des Kraftfahrzeugtanks 10 keine oder eine verminderte Deformation des Kraftfahrzeugtanks 10 erreicht wird.

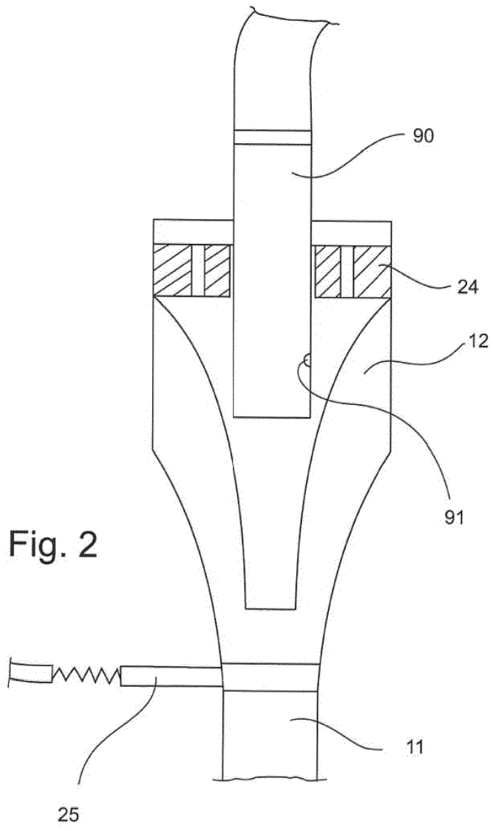

In Figur 2 ist im schematischen Querschnitt ein Einfüllstutzen 12 samt Einfüllrohr 11 eines Kraftfahrzeugtanks 10 gemäß einer fünften Ausführungsform der vorliegenden Erfindung dargestellt. Bei dem Kraftfahrzeugtank 10 gemäß der fünften Ausführungsform der vorliegenden Erfindung ist der zumindest eine Aktuator 24 als ein Elektromagnet 24 ausgebildet, der im Einfüllstutzen 12 angeordnet ist. Bei dem dargestellten Ausführungsbeispiel ist der Elektromagnet 24 in Form eines Ringmagneten 24 ausgebildet. Der Elektromagnet 24 ist dabei zwischen einem Aktivzustand und einem Passivzustand betätigbar, wobei im Aktivzustand der Elektromagnet 24 ein Magnetfeld erzeugt, und wobei der Elektromagnet 24 im Passivzustand kein Magnetfeld erzeugt.

Durch Übertragen eines Schließsignals, das auch als Befüllstoppsignal bezeichnet werden kann, von der Datenausgabeeinheit 63 der Tanksteuereinrichtung 60 an den Elektromagneten 24 wird dieser in dessen Passivzustand überführt, so dass kein Magnetfeld erzeugt wird und folglich ein in den Einfüllstutzen 12 eingeführtes Zapfventil 90 verschlossen wird. Ein entsprechend ausgebildeter Kraftfahrzeugtank 10 bietet den Vorteil, dass zum Beenden eines Befüllvorganges kein Druckaufbau innerhalb des Kraftfahrzeugtanks 10 notwendig ist, so dass zum einen ein optional bereitgestelltes Aktivkohlefilter 40 weniger stark beladen wird und darüber hinaus keine Deformation des Kraftfahrzeugtanks 10 durch Druckbeaufschlagung erfolgt, wodurch eine erhöhte Genauigkeit der Bestimmung eines Befüllzustandes des Kraftfahrzeugtanks 10 ermöglicht ist. Darüber hinaus bietet der Kraftfahrzeugtank 10 gemäß der fünften Ausführungsform den Vorteil, dass zum Beenden des Befüllvorganges noch nicht einmal das Einfüllrohr 11 mit Kraftstoff befüllt werden muss, so dass ein sehr zielgenauer Befüllstopp erreichbar ist. Ferner bietet der Kraftfahrzeugtank 10 gemäß der fünften Ausführungsform den Vorteil, dass beim Beenden des Befüllvorganges keine von einem Zapfventil 90 hervorgerufene Abschaltverzögerung auftritt.

Aus Figur 1 ist ersichtlich, dass der Kraftfahrzeugtank 10 ferner einen Neigungssensor 80 zum Bestimmen einer Neigung des Kraftfahrzeugtanks 10 umfassen kann. Der Neigungssensor 80 ist nicht obligatorisch sondern lediglich optional. Der Neigungssensor 80 ist dabei mit der Tanksteuereinrichtung 60 über eine dritte Datenaustauschverbindung 103 in Form einer dritten Datenleitung 103 verbunden, wobei die dritte Datenleitung 103 mit einer dritten Empfangseinheit 64 der Tanksteuereinrichtung 60 verbunden ist. Der Neigungssensor 80 ist dazu ausgebildet, über die von diesem ermittelte und die Neigung des Kraftfahrzeugtanks 10 repräsentierende Daten an die Tanksteuereinrichtung 60 zu übertragen.

Die Tanksteuereinrichtung 60 ist dabei dazu ausgebildet, zusätzlich zu den vom Füllstandsensor 13 übertragenen Daten die von dem Neigungssensor 80 übertragenen Daten zu empfangen und einen Ist-Füllstand des Kraftfahrzeugtanks 10 unter Berücksichtigung der Daten des Füllstandsensors 13 und des Neigungssensors 80 zu ermitteln. Somit wird die Bestimmung des Füllstandes des Kraftfahrzeugtanks 10 nochmals präziser ermöglicht, da eine Schrägstellung des Kraftfahrzeugs und somit des Kraftfahrzeugtanks 10 berücksichtigt werden kann.

Der Kraftfahrzeugtank 10 muss zur Berücksichtigung einer Raumlage bzw. Neigung des Kraftfahrzeugtanks 10 nicht notwendigerweise den Neigungssensor 80 aufweisen, da üblicherweise in einer Bordelektronik eines Kraftfahrzeugs ein Neigungssensor vorhanden ist, dessen Daten in die dritte Datenempfangseinheit 64 der Tanksteuereinrichtung 60 übertragbar sind.

Bei dem in Figur 1 dargestellten Kraftfahrzeugtank 10 ist der Aktivkohlefilter 40 über ein Auslassventil 41 und eine Spülleitung 43 mit einem Ansaugtrakt 51 des Motors 50 fluidverbunden. Somit ist eine Spülung des Aktivkohlefilters 40 durch Ansaugluft des Motors 50 ermöglicht.

### Bezugszeichenliste

10 Kraftfahrzeugtank
11 Einfüllrohr (des Kraftfahrzeugtanks)
12 Einfüllstutzen
13 Füllstandsensor
14 Kraftstofffördereinrichtung / Kraftstoffpumpe
15 Kraftstoffleitung
16 Rezirkulationsleitung
20 Aktuator / Rückschlagventil
21 Aktuator / Betriebsentlüftungsventil
22 Aktuator / Betankungsentlüftungsventil
23 Aktuator / Absperrventil / FTIV
24 Aktuator / Elektromagnet (innerhalb des Einfüllstutzens)
25 Aktuator / Störkörper (innerhalb des Einfüllstutzens)
30 Betriebsentlüftungsleitung
31 Betankungsentlüftungsleitung
40 Aktivkohlefilter
41 Auslassventil / Purge-Ventil
42 Drosselventil
43 Spülleitung
44 Diagnoseventil / OBD-Ventil
50 Motor
51 Ansaugtrakt (des Motors)
60 Tanksteuereinrichtung / Tanksteuerungseinrichtung (des Kraftfahrzeugtanks)
61 (erste) Datenempfangseinheit (der Tanksteuereinrichtung)
62 (zweite) Datenempfangseinheit (der Tanksteuereinrichtung)
63 Datenausgabeeinheit
64 (dritte) Datenempfangseinheit (de Tanksteuereinrichtung)
70 Elektronikeinheit / Bordcomputer / mobiles Endgerät / Datenverarbeitungsanlage (zur Erzeugung und Bereitstellung einer Datenwolke)
71 elektronischer Datenspeicher (der Elektronikeinheit)
80 Neigungssensor
90 Zapfventil
91 Abschaltbohrung
100 Datenleitung (zwischen Elektronikeinheit und Tanksteuereinrichtung)
101 (erste) Datenaustauschverbindung / Datenleitung / Signalleitung / elektrische Leitung
102 (zweite) Datenaustauschverbindung / Datenleitung / Signalleitung / elektrische Leitung
103 (dritte) Datenaustauschverbindung / Datenleitung / Signalleitung / elektrische Leitung
G Gasvolumen (im Kraftfahrzeugtank)
K Kraftstoff (im Kraftfahrzeugtank)
V_{A} Abschaltfüllvolumen
V_{F} Füllvolumen (des Kraftfahrzeugtanks)VₘₐₓMaximalfüllvolumen (des Kraftfahrzeugtanks)

## Patentansprüche

1. Verfahren zur Steuerung eines Befüllvorganges eines Kraftfahrzeugtanks (10), wobei das Verfahren folgende Verfahrensschritte aufweist:
- Bestimmen (B) einer geographischen Position des Kraftfahrzeugtanks (10);
- Ermitteln (C) mittels einer Tanksteuereinrichtung (60), ob die geographische Position des Kraftfahrzeugtanks (10) innerhalb eines vorbestimmten geographischen Gebiets liegt; **gekennzeichnet durch** den Verfahrensschritt:
- Ermitteln (D) eines von der geographischen Position des Kraftfahrzeugtanks (10) abhängigen Abschaltfüllvolumens, wenn die geographische Position des Kraftfahrzeugtanks (10) innerhalb des vorbestimmten geographischen Gebiets liegt.

2. Verfahren nach Anspruch 1, **gekennzeichnet durch** die folgenden Verfahrensschritte:
- Ermitteln (E) eines Füllvolumens des Kraftfahrzeugtanks (10) mittels eines Füllstandsensors (13);
- Vergleichen (F) des Füllvolumens des Kraftfahrzeugtanks (10) mit dem vorbestimmten Abschaltfüllvolumen mittels der Tanksteuereinrichtung (60); und
- Ausgeben eines von dem Vergleich des Füllvolumens des Kraftfahrzeugtanks (10) mit dem vorbestimmten Abschaltfüllvolumen abhängigen Signals mittel der Tanksteuereinrichtung (60) .

3. Verfahren nach Anspruch 1, **gekennzeichnet durch** die folgenden Verfahrensschritte:
- Ermitteln (A), ob ein Befüllvorgang des Kraftfahrzeugtanks (10) eingeleitet werden soll;
- Ausgeben (G) eines Öffnungssignals von der Tanksteuereinrichtung (60) an ein Betriebs- und/oder Betankungsentlüftungsventil (21, 22), wenn das Füllvolumen des Kraftfahrzeugtanks (10) geringer als das vorbestimmte Abschaltfüllvolumen ist;
- Überführen (H) des Betriebs- und/oder Betankungsentlüftungsventils (21, 22) in dessen Offenstellung bei Empfang des Öffnungssignals; und
- Ausgeben (I) eines Schließsignals von der Tanksteuereinrichtung (60) an einen Aktuator (20, 21, 22, 23, 24, 25, 44), wenn das Füllvolumen des Kraftfahrzeugtanks (10) das vorbestimmte Abschaltfüllvolumen erreicht oder überschritten hat.

4. Verfahren nach einem der vorhergehenden Ansprüche, **gekennzeichnet durch** die folgenden Verfahrensschritte:
- Ausgeben (G1) des Öffnungssignals von der Tanksteuereinrichtung (60) an das Betriebs- und/oder Betankungsentlüftungsventil (21, 22), wenn die geographische Position des Kraftfahrzeugtanks (10) außerhalb des vorbestimmten geographischen Gebiets liegt und das Füllvolumen des Kraftfahrzeugtanks (10) geringer als ein vorbestimmtes Maximalfüllvolumen ist;
- Überführen (H1) des Betriebs- und/oder Betankungsentlüftungsventils (21, 22) in dessen Offenstellung bei Empfang des Öffnungssignals; und
- Ausgeben (I1) des Schließsignals von der Tanksteuereinrichtung (60) an den elektrisch und/oder elektromagnetisch betätigbaren Aktuator (20, 21, 22, 23, 24, 25, 44), wenn das Füllvolumen des Kraftfahrzeugtanks (10) das vorbestimmte Maximalfüllvolumen erreicht oder überschritten hat.

5. Verfahren nach einem der vorhergehenden Ansprüche, **dadurch gekennzeichnet, dass** der zumindest eine Aktuator (21, 22) das im Kraftfahrzeugtank (10) angeordnete Betriebs- und/oder Betankungsentlüftungsventil (21, 22) ist; und/oder
dass der zumindest eine Aktuator (20) ein in und/oder an einem Einfüllrohr (11) des Kraftfahrzeugtanks angeordnetes Rückschlagventil (20) ist; und/oder
dass der zumindest eine Aktuator (23, 44) ein zwischen dem Kraftfahrzeugtank (10) und einem Aktivkohlefilter (40) und/oder zwischen dem Aktivkohlefilter (40) und der Atmosphäre angeordnetes Absperrventil (23, 44) ist; und/oder
dass der zumindest eine Aktuator (25) ein in ein Einfüllrohr (11) des Kraftfahrzeugtanks (10) einführbarer Störkörper (25) ist; und/oder
dass der zumindest eine Aktuator (24) ein in einem Einfüllstutzen (12) eingesetzter Elektromagnet (24) ist.

6. Verfahren nach einem der vorhergehenden Ansprüche, **dadurch gekennzeichnet, dass** das Verfahren ferner einen Verfahrensschritt zum Etablieren einer Datenaustauschverbindung zwischen der Tanksteuereinrichtung (60) und einer Befülleinrichtung (90) umfasst, wobei der zumindest eine Aktuator in der Befülleinrichtung (90) angeordnet ist und das Schließsignal über die Datenaustauschverbindung an den Aktuator gesendet wird.

7. Kraftfahrzeugtank (10), aufweisend:
- ein in den Kraftfahrzeugtank (10) mündendes Einfüllrohr (11), über das der Kraftfahrzeugtank (10) mittels einer Befülleinrichtung (90) befüllbar ist;
- ein Betriebs- und/oder Betankungsentlüftungsventil (21, 22), das elektrisch und/oder elektromagnetisch zwischen einer Offenstellung, in der der Kraftfahrzeugtank (10) mittels des Betriebs- und/oder Betankungsentlüftungsventils (21, 22) mit der Atmosphäre zumindest mittelbar fluidverbunden ist, und einer Schließstellung, in der der Kraftfahrzeugtank (10) mittels des Betriebs- und/oder Betankungsentlüftungsventils (21, 22) von der Atmosphäre fluidgetrennt ist, betätigbar ist;
- einen elektrisch und/oder elektromagnetisch betätigbaren Aktuator (20, 21, 22, 23, 24, 25, 44), mittels dem ein Beenden des Befüllvorganges des Kraftfahrzeugtanks (10) initiierbar ist;
- einen Füllstandsensor (13) zum Bestimmen eines Füllstandes des Kraftfahrzeugtanks (10);
wobei der Kraftfahrzeugtank (10) durch folgende Merkmale **gekennzeichnet** ist:
- der Kraftfahrzeugtank (10) weist eine Tanksteuereinrichtung (60) auf, die mit dem Betriebs- und/oder Betankungsentlüftungsventil (21, 22) und dem Aktuator (20, 21, 22, 23, 24, 25, 44) mittels einer ersten Datenaustauschverbindung (101) und mit dem Füllstandsensor (13) mittels einer zweiten Datenaustauschverbindung (102) signalgekoppelt ist; und
- die Tanksteuereinrichtung (60) ist dazu ausgebildet, die in zumindest einem der Ansprüche 1 bis 6 angegebenen Verfahrensschritte auszuführen.

8. Kraftfahrzeugtank (60) nach Anspruch 7, **dadurch gekennzeichnet, dass** dieser eine Datenempfangseinheit (61) aufweist, über die in einem elektronischen Datenspeicher (71) gespeicherte Daten an die Tanksteuereinrichtung (60) übertragbar sind.

9. Kraftfahrzeugtank (10) nach Anspruch 7 oder 8, **dadurch gekennzeichnet, dass** die Tanksteuereinrichtung (60) ferner eine Datenausgabeeinheit (63) umfasst, über die ein Öffnungssignal und/oder ein Schließsignal ausgebbar ist/sind.

10. Kraftfahrzeugtank (10) nach einem der Ansprüche 7 bis 9, **gekennzeichnet durch** die folgenden Merkmale:
- der zumindest eine Aktuator (21, 22) ist als ein Betriebs- und/oder Betankungsentlüftungsventil (21, 22) ausgebildet, das im Kraftfahrzeugtank (10) angeordnet ist;
- das Betriebs- und/oder Betankungsentlüftungsventil (21, 22) ist elektrisch und/oder elektromagnetisch zwischen einer Offenstellung und einer Schließstellung betätigbar;
- in der Offenstellung des Betriebs- und/oder Betankungsentlüftungsventils (21, 22) ist der Kraftfahrzeugtank (10) mittels des Betriebs- und/oder Betankungsentlüftungsventils (21, 22) mit einer Entlüftungsleitung (30, 31) fluidverbunden; und
- in der Schließstellung des Betriebs- und/oder Betankungsentlüftungsventils (21, 22) ist der Kraftfahrzeugtank (10) von der Entlüftungsleitung (30, 31) mittels des Betriebs- und/oder Betankungsentlüftungsventils (21, 22) fluidgetrennt.

11. Kraftfahrzeugtank (10) nach einem der Ansprüche 7 bis 10, **gekennzeichnet durch** die folgenden Merkmale:
- der zumindest eine Aktuator (20) ist als ein Rückschlagventil (20) ausgebildet, das in einem in den Kraftfahrzeugtank (10) mündenden Einfüllrohr (11) angeordnet ist;
- das Rückschlagventil (20) ist elektrisch und/oder elektromagnetisch zwischen einer Offenstellung und einer Schließstellung betätigbar;
- in der Offenstellung des Rückschlagventils (20) ist der Kraftfahrzeugtank (10) mit dem Einfüllrohr (11) fluidverbunden;
- in der Schließstellung des Rückschlagventils (20) ist der Kraftfahrzeugtank (10) von dem Einfüllrohr (11) mittels des Rückschlagventils (20) fluidgetrennt oder die lichte Weite des Einfüllrohrs (11) ist mittels des Rückschlagventils (20) reduziert.

12. Kraftfahrzeugtank (10) nach einem der Ansprüche 7 bis 11, **gekennzeichnet durch** die folgenden Merkmale:
- der zumindest eine Aktuator (25) ist als ein Störkörper (25) ausgebildet, der in einem in den Kraftfahrzeugtank (10) mündenden Einfüllrohr (11) angeordnet ist;
- der Störkörper (25) ist elektrisch und/oder elektromagnetisch zwischen einer Offenstellung und einer Störstellung betätigbar;
- in der Offenstellung des Störkörpers (25) ist eine lichte Weite des Einfüllrohres (11) nicht reduziert; und
- in der Störstellung des Störkörpers (25) ragt dieser in das Einfüllrohr (11) und reduziert die lichte Weite des Einfüllrohrs (11).

13. Kraftfahrzeugtank (10) nach einem der Ansprüche 7 bis 12, **gekennzeichnet durch** die folgenden Merkmale:
- der zumindest eine Aktuator (23, 44) ist als Absperrventil (23, 44) ausgebildet, das zwischen dem Kraftfahrzeugtank (10) und einem Aktivkohlefilter (40) angeordnet ist;
- das Absperrventil (23, 44) ist elektrisch und/oder elektromagnetisch zwischen einer Offenstellung und einer Schließstellung betätigbar;
- in der Offenstellung des Absperrventils (23, 44) ist der Kraftfahrzeugtank (10) mittels des Absperrventils (23, 44) mit dem Aktivkohlefilter (40) fluidverbunden; und
- in der Schließstellung des Absperrventils (23, 44) ist der Kraftfahrzeugtank (10) von dem Aktivkohlefilter (40) mittels des Absperrventils (23, 44) fluidgetrennt.

14. Kraftfahrzeugtank (10) nach einem der Ansprüche 7 bis 11, **gekennzeichnet durch** die folgenden Merkmale:
- der zumindest eine Aktuator (24) ist als ein Elektromagnet (24) ausgebildet, der in einem Einfüllstutzen (12) des in den Kraftfahrzeugtank (10) mündenden Einfüllrohrs (11) angeordnet ist;
- der Elektromagnet (24) ist zwischen einem Aktivzustand und einem Passivzustand betätigbar;
- im Aktivzustand erzeugt der Elektromagnet (24) ein Magnetfeld; und
- im Passivzustand erzeugt der Elektromagnet (24) kein Magnetfeld.

15. Kraftfahrzeugtank (10) nach einem der Ansprüche 7 bis 14, **dadurch gekennzeichnet, dass** das von dem Vergleich des Füllvolumens des Kraftfahrzeugtanks (10) mit dem vorbestimmten Abschaltfüllvolumen abhängige Signal über eine Signalübertragungseinrichtung ausgegeben wird.

## Claims

1. Method for controlling a filling process of a motor vehicle tank (10), the method comprising the following method steps:
- Determine a geographic location of the motor vehicle tank;
- determining, by means of the tank control device, whether the geographical position of the motor vehicle tank is within a predetermined geographical area; **characterized by** the method step:
- Determining a shutdown fill volume dependent on the geographical position of the motor vehicle tank, if the geographical position of the motor vehicle tank is within the predetermined geographical area.

2. The method according to claim 1, **characterized by** the following method steps:
- Determining a filling volume of the motor vehicle tank by means of a filling level sensor;
- comparing the fill volume of the motor vehicle tank with the predetermined shut-off fill volume by means of the tank control device; and
- Outputting, by means of the tank control device, a signal dependent on the comparison of the filling volume of the motor vehicle tank with the predetermined shut-off filling volume.

3. The method according to claim 1, **characterized by** the following method steps:
- Determine whether a filling operation of the motor vehicle tank is to be initiated;
- outputting an opening signal from the tank control device to an operating and/or refueling vent valve when the fill volume of the motor vehicle tank is less than the predetermined shut-off fill volume;
- moving the service and/or refueling vent valve to its open position upon receipt of the open signal; and
- Outputting a close signal from the tank control device to an actuator when the fill volume of the motor vehicle tank has reached or exceeded the predetermined shut-off fill volume.

4. The method according to any one of the preceding claims, **characterized by** the following method steps:
- outputting the opening signal from the tank control device to the service and/or refueling vent valve when the geographical position of the motor vehicle tank is outside the predetermined geographical area and the filling volume of the motor vehicle tank is less than a predetermined maximum filling volume;
- moving the service and/or refueling vent valve to its open position upon receipt of the open signal; and
- Outputting the closing signal from the tank control device to the electrically and/or electromagnetically actuable actuator when the filling volume of the motor vehicle tank (10) has reached or exceeded the predetermined maximum filling volume.

5. Method according to any one of the preceding claims, **characterized in that** the at least one actuator is the service and/or refueling vent valve arranged in the motor vehicle tank; and/or in that the at least one actuator is a check valve arranged in and/or on a filler pipe of the motor vehicle tank; and/or
**in that** the at least one actuator is a shut-off valve arranged between the motor vehicle tank and an activated carbon filter and/or between the activated carbon filter and the atmosphere; and/or
**in that** the at least one actuator is an interfering body arranged in and/or on a filler pipe of the motor vehicle tank; and/or in that the at least one actuator is electronic magnet arranged in and/or on a filler pipe of the motor vehicle tank.

6. Method according to any one of the preceding claims, **characterized in that** the method further comprises a step of establishing a data exchange connection between the tank control device and a filling device, wherein the at least one actuator is disposed in the filling device and the closure signal is sent to the actuator via the data exchange connection.

7. Motor vehicle tank, comprising:
- a filler pipe opening into the motor vehicle tank, via which the motor vehicle tank can be filled by means of a filling device;
- an operating and/or refueling vent valve which is electrically and/or electromagnetically actuable between an open position, in which the motor vehicle tank is at least indirectly fluidly connected to the atmosphere by means of the operating and/or refueling vent valve, and a closed position, in which the motor vehicle tank is fluidly separated from the atmosphere by means of the operating and/or refueling vent valve;
- an electrically and/or electromagnetically actuable actuator by means of which termination of the filling process of the motor vehicle tank can be initiated;
- a level sensor for determining a level of the motor vehicle tank;
wherein the motor vehicle tank is **characterized by the following features** :
- the motor vehicle tank has a tank control device which is signal-coupled to the operating and/or refueling vent valve and the actuator by means of a first data exchange connection and to the level sensor by means of a second data exchange connection; and
- the tank control device is adapted to perform the method steps specified in at least one of claims 1 to 6.

8. Motor vehicle tank according to claim 7, **characterized in that** it has a data receiving unit via which data stored in an electronic data memory can be transmitted to the tank control device.

9. Motor vehicle tank according to claim 7 or 8, **characterized in that** the tank control device further comprises a data output unit via which an opening signal and/or a closing signal can be output.

10. A motor vehicle tank according to any one of claims 7 to 9, **characterized by** the following features:
- the at least one actuator is provided as an operating and/or refueling vent valve which is arranged in the motor vehicle tank;
- the service and/or refueling vent valve can be actuated electrically and/or electromagnetically between an open position and a closed position;
- in the open position of the service and/or refueling vent valve, the motor vehicle tank is fluidly connected to a vent line by means of the service and/or refueling vent valve; and
- in the closed position of the service and/or refueling vent valve, the motor vehicle tank is fluid-separated from the vent line by means of the service and/or refueling vent valve.

11. A motor vehicle tank according to any one of claims 7 to 10, **characterized by** the following features:
- the at least one actuator is designed as a check valve, which is arranged in a filler pipe opening into the motor vehicle tank;
- the service and/or refueling vent valve can be actuated electrically and/or electromagnetically between an open position and a closed position;
- in the open position of the check valve, the motor vehicle tank is fluidly connected to the filler tube;
- in the closed position of the check valve, the motor vehicle tank is fluid-separated from the filler pipe by means of the check valve or the clear width of the filler pipe is reduced by means of the check valve.

12. A motor vehicle tank according to any one of claims 7 to 11, **characterized by** the following features:
- the at least one actuator is designed as an interference body, which is arranged in a filler pipe opening into the motor vehicle tank;
- the interference body is electrically and/or electromagnetically actuable between an open position and an interference position;
- in the open position of the interference body, a clear width of the filler pipe is not reduced; and
- in the interference position of the interference body (25), it projects into the filler tube (11) and reduces the clear width of the filler tube (11).

13. A motor vehicle tank according to any one of claims 7 to 12, **characterized by** the following features:
- the at least one actuator is provided as a shut-off valve, which is arranged between the motor vehicle tank and an activated carbon filter;
- the shut-off valve can be actuated electrically and/or electromagnetically between an open position and a closed position;
- in the open position of the shut-off valve, the motor vehicle tank is fluidly connected to the activated carbon filter by means of the shut-off valve; and
- in the closed position of the shut-off valve, the motor vehicle tank is fluid-separated from the activated carbon filter by means of the shut-off valve.

14. A motor vehicle tank according to any one of claims 7 to 11, **characterized by** the following features:
- the at least one actuator is provided as an electromagnet which is arranged in a filler neck of the filler pipe opening into the motor vehicle tank;
- the electromagnet is operable between an active state and a passive state;
- in the active state, the electromagnet generates a magnetic field; and
- in the active state, the electromagnet generates a magnetic field; and

15. Motor vehicle tank (10) according to one of claims 7 to 14, **characterized in that** the signal dependent on the comparison of the filling volume of the motor vehicle tank with the predetermined shut-off filling volume is output via a signal transmission device.

## Revendications

1. Procédé de commande d'un processus de remplissage d'un réservoir de véhicule automobile (10), le procédé comprenant les étapes de procédé suivantes :
- détermination (B) d'une position géographique du réservoir de véhicule automobile (10) ;
- détermination (C), au moyen d'un dispositif de commande de réservoir (60), du fait de savoir si la position géographique du réservoir de véhicule automobile (10) se situe dans une zone géographique prédéterminée ; **caractérisé par** l'étape de procédé :
- détermination (D) d'un volume de remplissage de coupure dépendant de la position géographique du réservoir de véhicule automobile (10) si la position géographique du réservoir de véhicule automobile (10) se situe dans la zone géographique prédéterminée.

2. Procédé selon la revendication 1, **caractérisé par** les étapes de procédé suivantes :
- détermination (E) d'un volume de remplissage du réservoir de véhicule automobile (10) au moyen d'un capteur de niveau de remplissage (13) ;
- comparaison (F) du volume de remplissage du réservoir de véhicule automobile (10) avec le volume de remplissage de coupure prédéterminé au moyen du dispositif de commande de réservoir (60) ; et
- sortie d'un signal dépendant de la comparaison du volume de remplissage du réservoir de véhicule automobile (10) avec le volume de remplissage de coupure prédéterminé au moyen du dispositif de commande de réservoir (60).

3. Procédé selon la revendication 1, **caractérisé par** les étapes de procédé suivantes :
- détermination (A) du fait de savoir si un processus de remplissage du réservoir de véhicule automobile (10) doit être lancé ;
- sortie (G) d'un signal d'ouverture du dispositif de commande de réservoir (60) vers une vanne de désaération de fonctionnement et/ou de ravitaillement (21, 22) lorsque le volume de remplissage du réservoir de véhicule automobile (10) est inférieur au volume de remplissage de coupure prédéterminé ;
- transfert (H) de la vanne de désaération de fonctionnement et/ou de ravitaillement (21, 22) dans sa position ouverte lorsque le signal d'ouverture est reçu ; et
- sortie (I) d'un signal de fermeture du dispositif de commande de réservoir (60) vers un actionneur (20, 21, 22, 23, 24, 25, 44) lorsque le volume de remplissage du réservoir de véhicule automobile (10) a atteint ou dépassé le volume de remplissage de coupure prédéterminé.

4. Procédé selon l'une des revendications précédentes, **caractérisé par** les étapes de procédé suivantes :
- sortie (G1) du signal d'ouverture du dispositif de commande de réservoir (60) vers la vanne de désaération de fonctionnement et/ou de ravitaillement (21, 22) lorsque la position géographique du réservoir de véhicule automobile (10) se situe en dehors de la zone géographique prédéterminée et le volume de remplissage du réservoir de véhicule automobile (10) est inférieur à un volume de remplissage maximal prédéterminé ;
- transfert (H1) de la vanne de désaération de fonctionnement et/ou de ravitaillement (21, 22) dans sa position ouverte lorsque le signal d'ouverture est reçu ; et
- sortie (11) du signal de fermeture du dispositif de commande de réservoir (60) vers l'actionneur pouvant être actionné électriquement et/ou électromagnétiquement (20, 21, 22, 23, 24, 25, 44) lorsque le volume de remplissage du réservoir du véhicule automobile (10) a atteint ou dépassé le volume de remplissage maximal prédéterminé.

5. Procédé selon l'une des revendications précédentes, **caractérisé en ce que** l'au moins un actionneur (21, 22) est la vanne de désaération de fonctionnement et/ou de ravitaillement (21, 22) disposée dans le réservoir de véhicule automobile (10) ; et/ou en ce que l'au moins un actionneur (20) est un clapet anti-retour (20) disposé dans et/ou sur un tuyau de remplissage (11) du réservoir de véhicule automobile ; et/ou en ce que l'au moins un actionneur (23, 44) est une vanne d'arrêt (23, 44) disposée entre le réservoir de véhicule automobile (10) et un filtre à charbon actif (40) et/ou entre le filtre à charbon actif (40) et l'atmosphère ; et/ou
**en ce que** l'au moins un actionneur (25) est un corps perturbateur (25) pouvant être introduit dans un tuyau de remplissage (11) du réservoir de véhicule automobile (10) ; et/ou en ce que l'au moins un actionneur (24) est un électroaimant (24) inséré dans une tubulure de remplissage (12).

6. Procédé selon l'une des revendications précédentes, **caractérisé en ce que** le procédé comprend en outre une étape de procédé permettant d'établir une connexion d'échange de données entre le dispositif de commande de réservoir (60) et un dispositif de remplissage (90), l'au moins un actionneur étant agencé dans le dispositif de remplissage (90) et le signal de fermeture étant envoyé à l'actionneur par l'intermédiaire de la connexion d'échange de données.

7. Réservoir de véhicule automobile (10), comprenant :
- un tuyau de remplissage (11) débouchant dans le réservoir de véhicule automobile (10), par lequel le réservoir de véhicule automobile (10) peut être rempli au moyen d'un dispositif de remplissage (90) ;
- une vanne de désaération de fonctionnement et/ou de ravitaillement (21, 22) pouvant être actionnée électriquement et/ou électromagnétiquement entre une position ouverte, dans laquelle le réservoir de véhicule automobile (10) est en communication fluidique au moins indirectement avec l'atmosphère au moyen de la vanne de désaération de fonctionnement et/ou de ravitaillement (21, 22), et une position fermée, dans laquelle le réservoir de véhicule automobile (10) est séparé de manière fluidique de l'atmosphère au moyen de la vanne de désaération de fonctionnement et/ou de ravitaillement (21, 22) ;
- un actionneur (20, 21, 22, 23, 24, 25, 44) pouvant être actionné électriquement et/ou électromagnétiquement, au moyen duquel une fin du processus de remplissage du réservoir de véhicule automobile (10) peut être initiée ;
- un capteur de niveau de remplissage (13) permettant de déterminer un niveau de remplissage du réservoir de véhicule automobile (10) ;
le réservoir de véhicule automobile (10) étant **caractérisé par** les caractéristiques suivantes :
- le réservoir de véhicule automobile (10) comprend un dispositif de commande de réservoir (60) qui est couplé par signal avec la vanne de désaération de fonctionnement et/ou de ravitaillement (21, 22) et l'actionneur (20, 21, 22, 23, 24, 25, 44) au moyen d'une première connexion d'échange de données (101) et avec le capteur de niveau de remplissage (13) au moyen d'une seconde connexion d'échange de données (102) ; et
- le dispositif de commande de réservoir (60) est conçu pour exécuter les étapes du procédé indiquées dans au moins l'une des revendications 1 à 6.

8. Réservoir de véhicule automobile (60) selon la revendication 7, **caractérisé en ce qu'**il comprend une unité de réception de données (61) par l'intermédiaire de laquelle des données stockées dans une mémoire de données électronique (71) peuvent être transmises au dispositif de commande de réservoir (60).

9. Réservoir de véhicule automobile (10) selon la revendication 7 ou 8, **caractérisé en ce que** le dispositif de commande de réservoir (60) comporte en outre une unité de sortie de données (63) par l'intermédiaire de laquelle un signal d'ouverture et/ou un signal de fermeture peuvent être émis.

10. Réservoir de véhicule automobile (10) selon l'une des revendications 7 à 9, **caractérisé par** les caractéristiques suivantes :
- l'au moins un actionneur (21, 22) est conçu comme une vanne de désaération de fonctionnement et/ou de ravitaillement (21, 22) qui est disposée dans le réservoir de véhicule automobile (10) ;
- la vanne de désaération de fonctionnement et/ou de ravitaillement (21, 22) peut être actionnée électriquement et/ou électromagnétiquement entre une position ouverte et une position fermée ;
- dans la position ouverte de la vanne de désaération de fonctionnement et/ou de ravitaillement (21, 22), le réservoir de véhicule automobile (10) est relié fluidiquement à une conduite de désaération (30, 31) au moyen de la vanne de désaération de fonctionnement et/ou de ravitaillement (21, 22) ; et
- dans la position fermée de la vanne de désaération de fonctionnement et/ou de ravitaillement (21, 22), le réservoir de véhicule automobile (10) est séparé fluidiquement de la conduite de désaération (30, 31) au moyen de la vanne de désaération de fonctionnement et/ou de ravitaillement (21, 22).

11. Réservoir de véhicule automobile (10) selon l'une des revendications 7 à 10, **caractérisé par** les caractéristiques suivantes :
- l'au moins un actionneur (20) est conçu sous la forme d'un clapet anti-retour (20) qui est disposé dans un tuyau de remplissage (11) débouchant dans le réservoir de véhicule automobile (10) ;
- le clapet anti-retour (20) peut être actionné électriquement et/ou électromagnétiquement entre une position ouverte et une position fermée ;
- dans la position ouverte du clapet anti-retour (20), le réservoir de véhicule automobile (10) est relié fluidiquement au tuyau de remplissage (11) ;
- dans la position fermée du clapet anti-retour (20), le réservoir de véhicule automobile (10) est séparé fluidiquement du tuyau de remplissage (11) au moyen du clapet anti-retour (20) ou le diamètre intérieur du tuyau de remplissage (11) est réduit au moyen du clapet anti-retour (20).

12. Réservoir de véhicule automobile (10) selon l'une des revendications 7 à 11, **caractérisé par** les caractéristiques suivantes :
- l'au moins un actionneur (25) est conçu comme un corps perturbateur (25) qui est disposé dans un tuyau de remplissage (11) débouchant dans le réservoir de véhicule automobile (10) ;
- le corps perturbateur (25) peut être actionné électriquement et/ou électromagnétiquement entre une position ouverte et une position perturbée ;
- dans la position ouverte du corps perturbateur (25), un diamètre intérieur du tuyau de remplissage (11) n'est pas réduit ; et
- dans la position perturbée du corps perturbateur (25), ce dernier fait saillie dans le tuyau de remplissage (11) et réduit le diamètre intérieur du tuyau de remplissage (11).

13. Réservoir de véhicule automobile (10) selon l'une des revendications 7 à 12, **caractérisé par** les caractéristiques suivantes :
- l'au moins un actionneur (23, 44) est conçu comme une vanne d'arrêt (23, 44) qui est disposée entre le réservoir de véhicule automobile (10) et un filtre à charbon actif (40) ;
- la vanne d'arrêt (23, 44) peut être actionnée électriquement et/ou électromagnétiquement entre une position ouverte et une position fermée ;
- dans la position ouverte de la vanne d'arrêt (23, 44), le réservoir de véhicule automobile (10) est relié fluidiquement au filtre à charbon actif (40) au moyen de la vanne d'arrêt (23, 44) ; et
- dans la position fermée de la vanne d'arrêt (23, 44), le réservoir de véhicule automobile (10) est séparé fluidiquement du filtre à charbon actif (40) au moyen de la vanne d'arrêt (23, 44).

14. Réservoir de véhicule automobile (10) selon l'une des revendications 7 à 11, **caractérisé par** les caractéristiques suivantes :
- l'au moins un actionneur (24) est conçu comme un électroaimant (24) qui est disposé dans une tubulure de remplissage (12) du tuyau de remplissage (11) débouchant dans le réservoir de véhicule automobile (10) ;
- l'électroaimant (24) peut être actionné entre un état actif et un état passif ;
- à l'état actif, l'électroaimant (24) génère un champ magnétique ; et
- à l'état passif, l'électroaimant (24) ne génère pas de champ magnétique.

15. Réservoir de véhicule automobile (10) selon l'une des revendications 7 à 14, **caractérisé en ce que** le signal dépendant de la comparaison du volume de remplissage du réservoir de véhicule automobile (10) avec le volume de remplissage de coupure prédéterminé est émis par l'intermédiaire d'un appareil de transmission de signal.
